# EUROPÄISCHE PATENTSCHRIFT

(11) **EP 1 079 657 B1**
(45) Veröffentlichungstag und Bekanntmachung des Hinweises auf die Patenterteilung: **26.10.2005**
(21) Anmeldenummer: 00118018.1
(22) Anmeldetag: 22.08.2000
(51) Int. Cl.: H04Q 11/00

(54) **Verfahren zur Leitweglenkung von Datenpaketen eines optischen Datenpaketstromes**
Method for routing optical data packets
Méthode de routage des paquets de données optiques

(30) Priorität: 26.08.1999 DE 19940565
(43) Veröffentlichungstag der Anmeldung: 28.02.2001
(73) Patentinhaber: SIEMENS AKTIENGESELLSCHAFT, 80333 München (DE)
(72) Erfinder: Glingener, Christoph, Dr., 83620 Feldkirchen-Westerham (DE); Geiger, Harald, Dr., 82061 Neuried (DE); Gottwald, Erich, Dr., 83607 Holzkirchen (DE)

(56) Entgegenhaltungen:
- EP-A- 0 550 046
- EP-A- 0 557 019
- EP-A- 1 099 322
- SHIEH W ET AL: "A WAVELENGTH-ROUTING NODE USING MULTIFUNCTIONAL SEMICONDUCTOR OPTICAL AMPLIFIERS AND MULTIPLE-PILOT-TONE-CODED SUBCARRIER CONTROL HEADERS" IEEE PHOTONICS TECHNOLOGY LETTERS, IEEE INC. NEW YORK, US, Bd. 9, Nr. 9, 1. September 1997 (1997-09-01), Seiten 1268-1270, XP000721230 ISSN: 1041-1135
- GAUDINO R ET AL: "MOSAIC: A MULTIWAVELENGTH OPTICAL SUBCARRIER MULTIPLEXED CONTROLLEDNETWORK" IEEE JOURNAL ON SELECTED AREAS IN COMMUNICATIONS, IEEE INC. NEW YORK, US, Bd. 16, Nr. 7, 1. September 1998 (1998-09-01), Seiten 1270-1285, XP000785944 ISSN: 0733-8716
- ADAMCZYK O H ET AL: "COARSE AND FINE BIT SYNCHRONIZATION FOR WDM INTERCONNECTIONS USING TWO SUBCARRIER-MULTIPLEXED CONTROL PILOT TONES" IEEE PHOTONICS TECHNOLOGY LETTERS, IEEE INC. NEW YORK, US, Bd. 11, Nr. 8, August 1999 (1999-08), Seiten 1057-1059, XP000860993 ISSN: 1041-1135
- SANGSIRI T ET AL: "BIT SYNCHRONIZATION USING SUBCARRIERS FOR CONTROL SIGNALING" IEEE PHOTONICS TECHNOLOGY LETTERS, IEEE INC. NEW YORK, US, Bd. 11, Nr. 5, Mai 1999 (1999-05), Seiten 602-604, XP000830426 ISSN: 1041-1135

## Beschreibung

Die Erfindung betrifft ein Verfahren zur Leitweglenkung von Datenpaketen eines optischen Datenpaketstromes und ein optisches Übertragungssystem mit Leitweglenkung für Datenpakete, die jeweils durch einen datenfreien Zeitabschnitt getrennt sind.

Voraussichtlich wird der paketorientierte Datenverkehr in den nächsten Jahren, getrieben durch Internetapplikationen, exponentiell ansteigen, während der Markt für festnetzgebundene Telefonie nur langsam wächst. Hieraus ist für die nahe Zukunft ein erhöhter Bedarf von beispielsweise Verfahren zur Leitweglenkung von optischen Datenpaketen auf dem Gebiet der optischen Paketverarbeitung absehbar.

In bestehenden und zukünftigen optischen Übertragungssystemen, insbesondere in nach dem WDM-Prinzip (Wavelength Division Multiplexing) arbeitenden Übertragungssystemen, werden Daten in Form von Datenpaketen mit Hilfe eines optischen Signales übertragen, wobei die Datenpakete aus unterschiedlichen Signalarten bzw. Signalformaten bestehen können und speziell beim Einsatz der WDM-Technik den einzelnen Datenpaketen mehrere Übertragungskanäle zugeordnet werden. Derartige Signalarten bzw. Signalformate können sich sowohl hinsichtlich des verwendeten Protokolls und/oder der benutzten Datenübertragungsraten unterscheiden. Als Beispiele hierfür sind unter anderem ATM (Asynchronous Transfer Mode), IP (Internet Protokoll) und Gigabit Ethernet zu nennen.

Um die für die optische Übertragung zur Verfügung stehende Übertragungsbandbreite optimal auszunutzen, ist es insbesondere wünschenswert mit Hilfe eines optischen Datenpaketstromes mehrere unterschiedliche Signalarten übertragen und diese verbindungsindividuell weiterleiten zu können. Hierzu wird in bislang realisierten, optischen Übertragungssystemen üblicherweise eine kontinuierliche, paketorientierte Signalstruktur verwendet, die zusätzlich die optische Transparenz des optischen Übertragungssystems unterstützt. Desweiteren erfordert die Verwendung einer derartigen Signalstruktur insbesondere, daß die benutzte, paketorientierte Signalstruktur kompatibel zu bestehenden optischen Übertragungssystemen bzw. Übertragungseinrichtungen ist sowie daß die Datenpakete verbindungsindividuell in der jeweiligen optischen Übertragungseinrichtung weitergeleitet werden können.

In bislang realisierten Übertragungssystemen wird zur Leitweglenkung von optischen Datenpaketen, zunächst das optische Datenpaket in einer optischen Vermittlungseinrichtung opto-elektrisch gewandelt und dann anhand des elektrischen Datenpaketheaders die dem jeweiligen Datenpaket zugehörige Leitweginformation ermittelt. Anhand der ermittelten Leitweginformation wird entweder das durch ein elektrisches Datensignal repräsentierte Datenpaket oder das elektro-optisch gewandelte und somit durch ein optisches Datensignal repräsentierte Datenpaket vermittelt. Dies setzt eine opto-elektro-optische Wandlung des optischen Datensignals bzw. des optischen Datenpaketstromes in den optischen Übertragungseinrichtungen, in denen die Datenpakete vermittelt werden, voraus.

Desweiteren sind rein optische Paketvermittlungen bekannt, bei denen im Gegensatz zu bislang realisierten Übertragungssystemen die Vermittlung von optischen Datenpaketen ausschließlich mit Hilfe von optischen Übertragungseinrichtungen durchgeführt wird. Hierbei weist das optische Datenpaket einen optischen Datenpaketheader auf, der durch die jeweilige optische Vermittlungseinrichtung bitweise optisch verarbeitet wird. Anhand der aus dem optischen Datenpaketheader mit Hilfe eines enormen technischen Aufwandes gewonnenen Vermittlungsinformationen wird das zugehörige, optische Datenpaket in der Vermittlungseinrichtung vermittelt. Die Realisierung derartiger rein optischer Leitweglenkungsverfahren erfordert jedoch insbesondere aufgrund der für optische Übertragungssysteme üblichen, hohen Übertragungsraten im Gigaherzbereich einen erheblichen optischen, schaltungstechnischen Aufwand und einen hohen optischen Speicheraufwand, der in der Praxis zu erheblichen Realisierungsschwierigkeiten führt.

Eine weitere Möglichkeit der Leitwegelenkung wird durch in der WO 00/04668 offenbart. Diese zeigt ein Verfahren zur Verwendung eines optischen Leitwegeheaders für optische Netzwerke, bei dem Leitwegeinformationen im selben Kanal oder mit derselben Wellenlänge wie die Paketdaten versendet werden. Dabei unterscheiden sich die Leitwegeinformationen in ihren Eigenschaften leicht von den Datenpaketen, wodurch sie empfangsseitig detektiert und ohne Beeinträchtigung der Datenpakete verarbeitet werden können.

Die der Erfindung zu Grunde liegende Aufgabe besteht darin, die optische Leitweglenkung von Datenpaketen eines optischen Datenpaketstromes zu verbessern. Die Aufgabe wird ausgehend von einem Verfahren gemäß den Merkmalen des Oberbegriffs des Patentanspruches 1 durch das Merkmal des kennzeichnenden Teils gelöst.

Beim erfindungsgemäßen Verfahren werden sendeseitig Leitweginformationen in zugeordnete Frequenzgemische umgesetzt und durch Modulation eines Trägersignals mit diesen Frequenzengemischen Leitwegsignale erzeugt. Die erzeugten Leitwegsignale werden zumindest einem Datenpaket vor- und/oder nachgestellt und die Datenpakete inklusive den vor- und/oder nachgestellten Leitwegsignalen übermittelt. Empfangsseitig werden die Leitwegsignale hinsichtlich des für die Modulation benutzten Frequenzgemisches ausgewertet und die Datenpakete anhand der aus den Frequenzgemischen gewonnenen Leitweginformationen vermittelt. Den sendeseitig zum Routen der jeweiligen Datenpakete vorliegenden Leitweginformationen werden erfindungsgemäß Frequenzgemische zugeordnet und diese auf vorteilhafte Weise zur Modulation eines festgelegten Trägersignals benutzt, wodurch ein Leitwegsignal erzeugt wird. Das erzeugte Leitwegsignal wird in einer Sendeeinheit erfindungsgemäß dem jeweiligen, zumindest einen optischen Datenpaket vor- und/oder nachgestellt und das optische Datenpaket inklusive der vor- und/oder nachgestellten Leitwegsignalen über eine optische Übertragungsstrecke zu einer Empfangseinheit übermittelt. Vorteilhaft können unterschiedliche Signalarten wie z.B. SDH-Datenpakete oder IP-Datenpakete in die Datenpakete bzw. "Datencontainer" des optischen Datenpaketstromes verpackt werden, wobei zuvor deren Leitweginformationen aus dem von Signalart zu Signalart unterschiedlich realisierten elektrischen Datenpaketheader ausgelesen werden und umgesetzt in ein Frequenzgemisch zur Erzeugung von optischen Leitwegsignalen benutzt werden, welche den in den optischen Datenpaketen verpackten Daten unterschiedlicher Signalarten bzw. Signalformate vor- und/oder nachgestellt werden. Somit können die in den optischen Datenpaketen verpackten Daten unterschiedlicher Signalarten auf vorteilhafte Weise ausschließlich aufgrund der durch die empfangsseitige Auswertung der den optischen Datenpaketen vor- und/oder nachgestellten Leitwegsignalen rückgewonnenen Leitweginformationen vermittelt bzw. geroutet werden. Dies bedeutet, dass die einzelnen optischen Datenpakete in der Empfangseinheit bzw. Vermittlungseinrichtung vermittelt werden, ohne dass das komplette optische Datenpaket zunächst opto-elektrisch gewandelt und elektrisch ausgewertet werden muss. Vorteilhaft werden ausschließlich die dem optischen Datenpaket vor- und/oder nachgestellten Leitwegsignale hinsichtlich der für die Modulation des Trägersignals benutzten Frequenzgemische ausgewertet und anhand der dem jeweiligen Frequenzgemisch zugeordneten Leitweginformationen geroutet. Eine derartige Auswertung der vor- und/oder nachgestellten Leitwegsignale wird durch einen geringen schaltungstechnischen Aufwand realisiert, wodurch die Verwendung einer optischen Empfangseinheit mit Taktrückgewinnung und eine komplexe Auswertelogik eingespart wird.

Der wesentliche Aspekt des erfindungsgemäßen Verfahrens ist darin zu sehen, dass als Trägerfrequenz der Leitwegsignale die oder die halbe Datenübertragungsrate gewählt wird und dass für die Modulation des Leitwegsignals niederfrequente Modulationsfrequenzen benutzt werden. Die erfindungsgemäße Wahl der oder der halben Datenübertragungsrate als Trägerfrequenz dient ausschließlich der Einsparung von Datenübertragungsressourcen innerhalb des zu übertragenden Datenpaketes, d.h. für die Taktregeneration des im optischen Datenpaket übertragenen Datensignals werden nur wenige Overheadbits benötigt und somit kann über die eingesparte Datenübertragungskapazität bzw. die eingesparten Overheadbits frei verfügt werden, insbesondere können mit Hilfe der frei verfügbaren Bits zusätzliche Daten übertragen werden. Für die Leitweglenkung des optischen Datenpaketes ist eine derartige Wahl der Trägersignalfrequenz irrelevant. Dies bedeutet, dass das für die erfindungsgemäße Leitweglenkung benötigte Trägersignal eine beliebige Frequenz aufweisen kann, wobei die Nebenbedingung - Modulationsfrequenzen erheblich kleiner als die gewählte Trägerfrequenz - erfüllt sein muss. Diese wird durch die Verwendung von niederfrequenten Modulationsfrequenzen zur Erzeugung des Leitwegsignals erfüllt. Zusätzlich wird durch die Verwendung von niederfrequenten Modulationsfrequenzen die Auswertung des Leitwegsignals hinsichtlich des Frequenzgemisches bzw. der darin enthaltenen Leitweginformation erheblich vereinfacht und eine äußerst zuverlässige Detektion der unterschiedlichen Leitweginformationen realisierbar.

Gemäß einer weiteren Ausgestaltung des erfindungsgemäßen Verfahrens wird die Umsetzung der Leitweginformationen in Leitwegsignale durch die Amplitudenmodulation - Anspruch 2 - oder durch die Winkelmodulation - Anspruch 3 - eines Trägersignals mit einem Frequenzgemisch durchgeführt. Vorteilhaft ist sowohl für die Amplitudenmodulation als auch für die Winkelmodulation eines Trägersignals mit einem Frequenzgemisch kein hoher schaltungstechnischer Aufwand sowohl in der Sendeeinheit als auch in der Empfangseinheit erforderlich, insbesondere die Rückgewinnung des Frequenzgemisches aus dem übertragenen Leitwegsignal in der Empfangseinheit bzw. Vermittlungseinrichtung bei Verwendung der Amplitudenmodulation ist besonders kostengünstig und zuverlässig schaltungstechnisch realisierbar.

Gemäß einer weiteren Ausgestaltung des erfindungsgemäßen Verfahrens wird mit Hilfe des zumindest einem Datenpaket nachgestellten Leitwegsignals eine Verbindung beendet. Somit ist die zeitliche Länge eines Datenpaketes bzw. mehrerer Datenpakete einer Verbindung keinesfalls beschränkt, d.h. mehrere Datenpakete einer Verbindung können unmittelbar hintereinander auf denselben Ausgang der optischen Vermittlungseinrichtung weitergeleitet bzw. geroutet werden, ohne daß den dem ersten Datenpaket folgenden Datenpaketen ein Leitwegsignal vorgestellt wird, da die Verbindung erst durch das einzige, dem letzten Datenpaketen der unmittelbar hintereinander übermittelten Datenpakete dieser Verbindung nachgestellten Leitwegsignal beendet wird.

Weitere vorteilhafte Ausgestaltungen des erfindungsgemäßen Verfahrens insbesondere ein optisches Übertragungssystem mit Leitweglenkung für Datenpakete sind den weiteren Ansprüchen zu entnehmen.

Die Erfindung wird im folgenden anhand von zwei Blockschaltbildern und einem Diagramm näher erläutert. Dabei zeigen
- Figur 1: in einem Blockschaltbild beispielhaft den schematischen Aufbau eines optischen Übertragungssystems,
- Figur 2: in einem Diagramm ein optisches Datenpaket inklusive den vor- und nachgestellten Leitwegsignalen, und
- Figur 3: in einem weiteren Blockschaltbild ein optisches Übertragungssystem mit Leitweglenkung für Datenpakete.

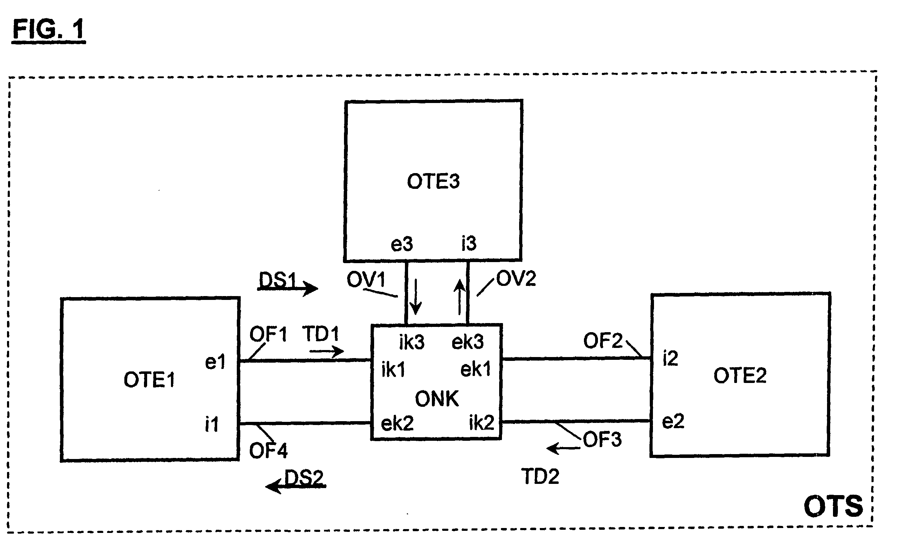

In Figur 1 ist ein beispielsweise eine erste, zweite und dritte, optische Übertragungseinrichtung OTE1-OTE3 aufweisendes, optisches Übertragungssystem OTS dargestellt, wobei beispielsweise die erste optische Übertragungseinrichtung OTE1 einen ersten Eingang i1 und einen ersten Ausgang e1, die zweite optische Übertragungseinrichtung OTE2 einen zweiten Eingang i2 und einen zweiten Ausgang e2 sowie die dritte optische Übertragungseinrichtung OTE3 einen dritten Eingang i3 und einen dritten Ausgang e3 aufweist. Des weiteren ist in der optischen Übertragungseinrichtung OTS ein optischer Netzknoten ONK vorgesehen, der beispielsweise einen ersten, zweiten und dritten Knoteneingang ik1,ik2,ik3 sowie einen ersten, zweiten und dritten Knotenausgang ek1,ek2,ek3 aufweist. Der erste Ausgang e1 der ersten optischen Übertragungseinrichtung OTE1 ist über eine erste optische Faser OF1 mit dem ersten Knoteneingang ik1 des optischen Netzknotens ONK verbunden und der erste Knotenausgang ek1 ist mit Hilfe der zweiten optischen Faser OF2 an den zweiten Eingang i2 der zweiten optischen Übertragungseinrichtung OTE2 angeschlossen. Analog dazu ist der zweite Ausgang e2 der zweiten optischen Übertragungseinrichtung OTE2 über die dritte optische Faser OF3 an den zweiten Knoteneingang ik2 des optischen Netzknotens ONK sowie der zweite Knotenausgang ek2 des optischen Netzknotens ONK über die vierte optische Faser OF4 an den ersten Eingang i1 der ersten optischen Übertragungseinrichtung OTE1 angeschlossen. Somit sind die erste und zweite optische Übertragungseinrichtung OTE1,OTE2 über den optischen Netzknoten OKN zur optischen Übertragung von Daten verbunden, wobei bevorzugt ein erster Datenstrom DS1 in einer ersten Übertragungsrichtung TD1 zur optischen Übertragung von Daten von der ersten zur zweiten optischen Übertragungseinrichtung OTE1,OTE2 und ein zweiter Datenstrom DS2 in einer zweiten Übertragungsrichtung TD2 zur optischen Übertragung von Daten von der zweiten zur ersten optischen Übertragungseinrichtung OTE2,OTE1 vorgesehen ist.

Des weiteren ist die dritte optische Übertragungseinrichtung OTE3 beispielsweise zum Einspeisen von Daten in den ersten und/oder den zweiten Datenstrom DS1,DS2 über eine erste und zweite optische Verbindungsfaser OV1,OV2 an den optischen Netzknoten ONK angeschlossen, wobei der dritte Knoteneingang ik3 bzw. der dritte Knotenausgang ek3 des optischen Netzknotens ONK mit dem dritten Ausgang e3 bzw. mit dem dritten Eingang i3 der dritten optischen Übertragungseinrichtung OTE3 verbunden ist. Somit können beispielsweise in der dritten optischen Übertragungsrichtung OTE3 vorhandene Daten mit Hilfe der ersten und zweiten Verbindungsfasern OV1,OV2 und dem optischen Netzknoten ONK in erster oder zweiter Übertragungsrichtung TD1,TD2 in den ersten oder zweiten Datenstrom DS1,DS2 eingespeist oder an die dritte optische Übertragungseinrichtung OTE3 zu übermittelnde Daten aus dem ersten oder zweiten Datenstrom DS1,DS2 ausgelesen sowie zur dritten optischen Übertragungseinrichtung OTE3 übertragen werden.

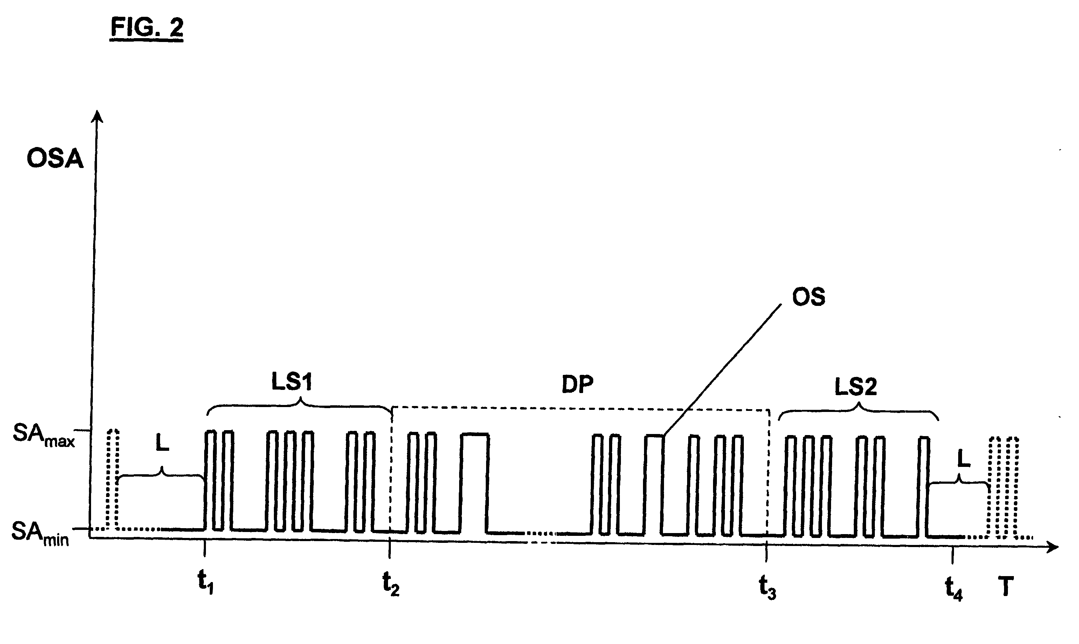

In Figur 2 ist in einem Diagramm beispielsweise ein optisches Datenpaket DP inklusive den erfindungsgemäßen vor- und nachgestellten Leitwegsignalen LS1,LS2 dargestellt. Die Vielzahl der Datenpakete DP inklusive ihrer vor- und nachgestellten Leitwegsignalen LS1,LS2 der unterschiedlichen Verbindungen bildet den ersten bzw. zweiten Datenstrom DS1,DS2. Desweiteren weist das Diagramm eine horizontale und eine vertikale Achse T,OSA auf, wobei durch die horizontale Achse die Zeit T bzw. der Zeitpunkt des Anfangs und des Endes der Übertragung eines Datenpaketes DP bzw. der vor- und nachgestellten Leitwegsignale LS1,LS2 und durch die vertikale Achse OSA die Amplitude OSA des optischen Signals OS bzw. der zu übertragenden, optischen Daten angezeigt wird. Der erste und zweite Datenstrom DS1,DS2 weisen erfindungsgemäß Datenpakete DP inklusive den vor- und nachgestellten Leitwegsignalen LS1,LS2 auf, wobei die Datenpakete DP des ersten und zweiten Datenstromes DS1,DS2 jeweils durch eine Mindestlänge aufweisende, datenfreie Zeitabschnitte L getrennt sind. In Figur 2 sind beispielhaft ein Datenpaket DP und ein erstes und ein zweites Leitwegsignal LS1,LS2 zur Erläuterung des erfindungsgemäßen Verfahrens dargestellt, wobei das erste Leitwegsignal LS1 dem Datenpaket DP vorgestellt und das zweite Leitwegsignal LS2 dem Datenpaket DP nachgestellt ist. Desweiteren wird durch die Amplitude OSA des das Datenpaket DP bzw. das erste und zweite Leitwegsignal LS1,LS2 repräsentierenden optischen Signals OS ein maximaler Signalamplitudenwert SAₘₐₓ nicht überschritten und ein minimaler Signalamplitudenwert SA_{Min} nicht unterschritten. Durch das erste Leitwegsignal LS1 können beispielsweise Leitweginformationen über die den Leitweg darstellenden, folgenden Netzknoten ONK bzw. optischen Übertragungseinrichtungen an das Datenpaket DP angefügt sein, wobei mit Hilfe des zweiten Leitwegsignals LS2 beispielsweise das Ende eines Datenpaketes DP bzw. einer Gruppe von Datenpaketen DP einer Verbindung der optischen Übertragungseinrichtung OTE1 bis OTE3 oder dem optischen Netzknoten ONK angezeigt werden kann.

Zur Erläuterung des Aufbaus des optischen Signals OS sind in Figur 2 ein erster bis vierter Zeitpunkt t₁-t₄ beispielhaft dargestellt, die den Beginn bzw. das Ende der Übertragung eines Datenpaketes DP bzw. des ersten oder zweiten Leitwegsignals LS1, LS2 markieren. Nach einem datenfreien Zeitabschnitt L wird zum ersten Zeitpunkt t₁ mit der Übertragung des ersten Leitwegsignals LS1 begonnen und solange fortgesetzt bis das dem Datenpaket DP vorgestellte, erste Leitwegsignal LS1 vollständig übertragen wurde. Zum zweiten Zeitpunkt t₂ ist das zeitliche Ende des ersten Leitwegsignals LS1 erreicht und das optische Datenpaket DP wird übertragen. Im Anschluß an die Übertragung des optischen Datenpaketes DP wird zum dritten Zeitpunkt t₃ das dem optischen Datenpaket DP nachgestellte, zweite Leitwegsignal LS2 übermittelt. Zum vierten Zeitpunkt t₄ ist das Ende des zweiten Leitwegsignals LS2 erreicht und ein weiterer datenfreier Zeitabschnitt L schließt sich an.

Das zuvor beschriebene optische Signal OS ist in Figur 2 beispielhaft nur ausschnittsweise dargestellt, d.h. zur optischen Übertragung von Daten mit Hilfe des erfindungsgemäßen Verfahrens wird eine Vielzahl derartiger optischer Datenpakete DP mit vor- und nachgestellten Leitwegsignalen LS1,LS2 verwendet, die in Ihrer Gesamtheit den kontinuierlichen ersten und zweiten Datenstrom DS1,DS2 darstellen. Dabei weisen die datenfreien Zeitabschnitte L zwischen aufeinanderfolgenden Datenpaketen DP und den vor- und nachgestellten Leitwegsignalen LS1,LS2 eine zeitliche Mindestlänge auf, die deutlich kleiner als eine Millisekunde, d.h. im Mikrosekundenbereich, ist. Dies ermöglicht den Einsatz von ökonomisch günstigen, elektronischen Schaltungen beispielsweise zur Steuerung der Vermittlung der optischen Datenpakete DP inklusive der vor- und nachgestellten Leitwegsignale LS1,LS2.

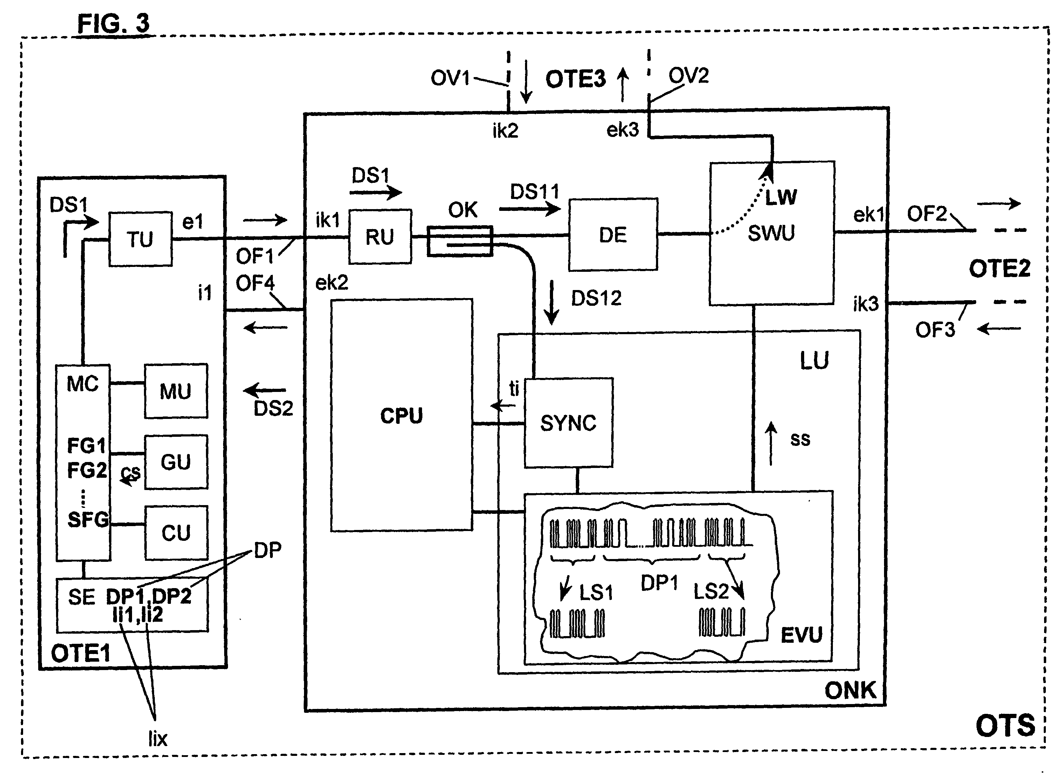

In Figur 3 ist ein Blockschaltbild zur Erläuterung des erfindungsgemäßen optischen Übertragungssystems OTS mit Leitweglenkung für Datenpakete DP dargestellt, wobei das erfindungsgemäße Verfahren beispielsweise anhand einer vorteilhaften Realisierung innerhalb des optischen Netzknotens ONK und der ersten optischen Übertragungseinrichtung OTE1 erläutert wird. Hierzu wird der schematische Aufbau der ersten optischen Übertragungseinrichtung OTE1 und des optischen Netzknotens ONK - wie bereits in Figur 1 dargestellt - näher erläutert. Der erste Eingang i1 bzw. der erste Ausgang e1 der ersten optische Übertragungseinrichtung OTE1 sind über die vierte bzw. erste optische Faser OF4,OF1 an den zweiten Ausgang ek2 bzw. den ersten Eingang ik1 des optischen Netzknotens ONK angeschlossen, wobei über die erste optische Faser OF1 ein erster Datenstrom DS1 und über die vierte optische Faser OF4 ein zweiter Datenstrom DS2 entgegengesetzt zum ersten Datenstrom DS1 übertragen wird. Desweiteren ist der zweite Eingang ik2 und der dritte Ausgang ek3 des optischen Netzknotens ONK über die erste und zweite optische Verbindungsfaser OV1,OV2 an die dritte optische Übertragungseinrichtung OTE3 sowie der dritte Eingang ik3 und der erste Ausgang ek1 des optischen Netzknotens ONK über die zweite und dritte optische Faser OF2,OF3 an die zweite optische Übertragungseinrichtung OTE2 angeschlossen - in Figur 3 durch strichliert gezeichnete Linien angedeutet.

Die erste optische Übertragungseinrichtung OTE1 weist eine Sendeeinheit TU, eine Steuereinheit MC, eine Modulationseinheit MU, eine Generationseinheit GU, eine Speichereinheit SE sowie eine Umsetzeinheit CU auf, wobei die Sendeeinheit TU, die Modulationseinheit MU, die Generationseinheit GU, die Speichereinheit SE und die Umsetzeinheit CU an die Steuereinheit MC eingeschlossen sind. Desweiteren ist der an die erste optische Faser OF1 angeschlossene erste Ausgang e1 der ersten optischen Übertragungseinrichtung OTE1 an die Sendeeinheit TU angeschlossen. In der Speichereinheit SE sind die jeweiligen, zu übertragenden Datenpakete DP und die zugehörigen Leitweginformationen lix gespeichert und können durch die Steuereinheit MC im Rahmen eines Lesezykluses aus der Speichereinheit SE gelesen werden.

Im optischen Netzknoten ONK sind beispielsweise eine zentrale Steuereinheit CPU, eine Leitweglenkeinheit LU, eine Schalteinheit SWU, eine Empfangseinheit RU sowie ein optisches Verzögerungsglied DE angeordnet, wobei die Leitweglenkeinheit LU eine Synchronisationseinheit SYNC und eine Auswerteeinheit EVU aufweist. Des weiteren ist der erste Eingang ik1 des optischen Netzknotens ONK über die Empfangseinheit RU an einen optischen Koppler OK angeschlossen, der das übertragene optische Signal OS bzw. den ersten Datenstrom DS1 in einen ersten Hauptdatenstrom DS11 und einen ersten Nebendatenstrom DS12 aufteilt, wobei der erste Hauptdatenstrom DS11 an das optische Verzögerungsglied DE und der erste Nebendatenstrom DS12 an die Leitweglenkeinheit LU übermittelt werden, d.h. der optische Koppler OK ist an das optische Verzögerungsglied DE und an die Leitweglenkeinheit LU angeschlossen. Die Schalteinheit SWU ist mit dem ersten und dritten Ausgang ek1,ek3 des optischen Netzknotens ONK und mit dem optischen Verzögerungsglied DE sowie mit der Leitweglenkeinheit LU bzw. der Auswerteeinheit EVU der Leitweglenkeinheit LU verbunden. Des weiteren ist die zentrale Steuereinheit CPU sowohl an die Synchronisationseinheit SYNC als auch an die Auswerteeinheit EVU der Leitweglenkeinheit LU angeschlossen.

Im gewählten Ausführungsbeispiel wird durch die in der ersten optischen Übertragungseinrichtung OTE1 angeordneten Generationseinheit GU, gesteuert von der Steuereinheit MC, ein Trägersignal cs mit einer festgelegten Trägerfrequenz, beispielsweise die oder die halbe Datenübertragungsrate, erzeugt und an die Steuereinheit MC übertragen. Des weiteren wird durch die Steuereinheit MC ein Datenpaket DP und die zugehörige Leitweginformation lix aus der Speichereinheit SE ausgelesen. In Figur 3 sind beispielsweise ein erstes und zweites Datenpaket DP1,DP2 und die zugehörige erste und zweite Leitweginformation li1, li2 dargestellt. Zunächst wird mit Hilfe der Umsetzeinheit CU beispielsweise die erste Leitweginformation li1 des ersten Datenpaketes DP1 in ein erstes Frequenzgemisch FG1 umgesetzt und das Trägersignal cs durch die Modulationseinheit MU und mit Hilfe des ersten Frequenzgemisches FG1 zu einem ersten Leitwegsignal LS1 moduliert. Zusätzlich wird beispielsweise mit Hilfe eines vordefinierten Standard-Frequenzgemisches SFG ein zweites Leitwegsignal LS2 zur Kennzeichnung des Endes des ersten Datenpaketes DP1 bzw. des letzten Datenpaketes DP einer Verbindung erzeugt. Die Umsetzung bzw. Modulation des Trägersignals cs mit Hilfe des jeweiligen Frequenzgemisches FG1,SFG wird beispielsweise mit Hilfe der Amplituden- oder Winkelmodulation durchgeführt, wobei die jeweiligen Frequenzgemische FG1,SFG überwiegend aus niederfrequenten Frequenzen zusammengesetzt sind. Das erzeugte erste Leitwegsignal LS1 wird mit Hilfe der Steuereinheit SE dem ersten Datenpaket DP1 vor- und das erzeugte zweite Leitwegsignal LS2 dem ersten Datenpaket DP1 nachgestellt. Analog dazu werden sämtliche in der ersten optischen Übertragungseinrichtung OTE1 zur Übertragung vorliegenden Datenpakete DP mit Ihren Leitweginformationen lix verknüpft und anschließend in dem ersten Datenstrom DS1 seriell an die Sendeeinheit TU übertragen. Von der Sendeeinheit TU wird das erste Datenpakete DP1 inklusive den vor- und nachgestellten ersten und zweiten Leitwegsignal LS1,LS2 über die erste optische Faser OF1 zum Empfangseinheit RU des optischen Netzknoten ONK übertragen.

Das in der Empfangseinheit RU empfangene optische Signal OS bzw. der erste Datenstrom DS1 wird mit Hilfe des nachfolgenden optischen Kopplers OK in den ersten Hauptdatenstrom DS11 und den ersten Nebendatenstrom DS12 aufgeteilt. Der erste Hauptdatenstrom DS11 wird mit Hilfe des optischen Verzögerungsgliedes DE um eine Mindestlänge verzögert, wobei sich die Mindestlänge zumindest aus der für die Auswertung des vorgestellten ersten Leitwegsignales LS1 und der zum Durchschalten des Leitweges LW benötigten Schaltdauer zusammensetzt.

Der erste Nebendatenstrom DS12 wird an die Synchronisationseinheit SYNC der Leitweglenkeinheit LU übertragen, d.h. das erste Datenpaket DP1 inklusive des vor- und nachgestellten, ersten und zweiten Leitwegsignals LS1,LS2 werden an die Synchronisationseinheit SYNC übermittelt. In der Synchronisationseinheit SYNC wird das modulierte Trägersignal cs des dem ersten Datenpaket DP1 vorgestellten ersten Leitwegsignals LS1 zur Taktsynchronisierung verwendet, d.h. durch die an die Datenübertragungsrate angepaßte Frequenz des Trägersignals cs kann dieses Trägersignal cs vorteilhaft zur Taktregeneration im optischen Netzknoten ONK benutzt werden. Somit werden aus dem Trägersignal cs Taktinformationen ti gewonnen, die an die zentrale Steuereinheit CPU übermittelt werden.

Von der Synchronisationseinheit SYNC wird das erste Datenpaket DP1 inklusive des vor- und nachgestellten ersten und zweiten Leitwegsignales LS1,LS2 zu der Auswerteeinheit EVU der Leitweglenkeinheit LU übertragen. In der Auswerteeinheit EVU wird zunächst der Vorlauf bzw. das dem ersten Datenpaket DP1 vorgestellte erste Leitwegsignal DS1 detektiert und mit Hilfe der zentralen Steuereinheit CPU verarbeitet. Dabei wird das zur Modulation des Trägersignals cs benutzte erste Frequenzgemisch FG1 detektiert und beispielsweise die durch das erste Frequenzgemisch FG1 rückgewonnene erste Leitweginformation li1 für die Leitweglenkung des ersten Datenpaketes DP1 in ein Steuersignal ss zur Steuerung der Schalteinheit SWU umgesetzt. Mit Hilfe des Steuersignals ss wird durch die Schalteinheit SWU für die Verbindung bzw. das einer Verbindung zugehörige erste Datenpaket DP1 inklusive den vor- und nachgestellten ersten und zweiten Leitwegsignalen LS1,LS2 ein spezifizierten Kanal bzw. eine spezifizierte optische Faser OF ausgewählt und das durch das optische Verzögerungsglied DE geeignet verzögerte, erste Datenpaket DP1 inklusive den vor- und nachgestellten ersten und zweiten Leitwegsignalen LS1,LS2 durchgeschaltet. Dieses Steuersignal ss liegt solange unverändert an der Schalteinheit SWU an, bis durch die Auswerteeinheit EVU die zweite, das Ende der Übertragung des ersten Datenpaketes DP1 repräsentierende Leitwegsignal LS2 detektiert wird. Nach der Detektion des mit dem Standard-Frequenzgemisch erzeugten, zweiten Leitwegsignals LS2 wird die Übertragung des Steuersignals ss an die Schalteinheit SWU beendet. Des weiteren wird beispielsweise nach erfolgreicher Auswertung des ersten und zweiten Leitwegsignales LS1,LS2 das in der Auswerteeinheit EVU vorliegende erste Datenpaket DP1 inklusive den getrennt verarbeitenden ersten und zweiten Leitwegsignalen LS1,LS2 verworfen.

In Figur 3 ist anhand einer punktierten Linie der für das erste Datenpaket DP1 durchgeschaltete Leitweg LW in der Schalteinheit SWU dargestellt. Das erste Datenpaket DP1 inklusive den vor- und nachgestellten ersten und zweiten Leitwegsignalen LS1,LS2 wird im dargestellten Ausführungsbeispiel über die zweite optische Verbindungsfaser OV2 an die dritte optische Übertragungseinrichtung OTE3 weitergeleitet.

Werden mehrere Datenpakete DP einer Verbindung unmittelbar hintereinander im ersten Datenstrom DS1 übertragen, so wird dem ersten Datenpaket DP1 dieser Gruppe von Datenpaketen DP einer Verbindung das erste Leitwegsignal LS1 vorgestellt und dem Letzten der Gruppe von Datenpaketen DP das zweite Leitwegssignal LS2 nachgestellt. Dadurch wird erreicht, daß das Steuersignal ss über den Zeitraum der Übertragung der Gruppe von Datenpaketen DP anliegt und sämtliche Datenpakete DP der Gruppe mit Hilfe der Schalteinheit SWU an denselben Ausgang weitergeschaltet werden.

Für die Realisierung der Schalteinheit SWU können beispielsweise optische Verzweiger mit Polarisationsstrahlteilern, elektrisch schaltbaren Polarisationsdrehern und Polarisationsfiltern sowie gegebenenfalls auch optische Verstärker vorgesehen sein. Alternativ dazu könnten auch optische Verzweiger mit Hilfe von Halbleiterverstärkern verwendet werden.

Die Anwendung des erfindungsgemäßen Verfahrens ist keinesfalls auf WDM-Übertragungssysteme beschränkt, sondern kann durchaus für die Leitweglenkung von Datenpaketen DP über beliebige optische, paketorientierte Übertragungstrecken eingesetzt werden.

## Patentansprüche

1. Verfahren zur Leitweglenkung von Datenpaketen (DP) eines optischen Datenpaketstromes (DS1), die jeweils durch einen datenfreien Zeitabschnitt (L) getrennt sind,
- bei dem sendeseitig Leitweginformationen (li1,li2) in zugeordnete Frequenzgemische (FG1,FG2,SFG) umgesetzt werden,
- bei dem durch Modulation eines Trägersignals (cs) mit diesen Frequenzgemischen (FG1, FG2, SFG) Leitwegsignale (LS1,LS2) erzeugt werden,
- bei dem die erzeugten Leitwegsignale (LS1,LS2) zumindest einem Datenpaket (DP1) vor- und/oder nachgestellt werden,
- bei dem die Datenpakete (DP1,DP2) inklusive den Leitwegsignalen (LS1,LS2) übermittelt werden,
- bei dem empfangsseitig die Leitwegsignale (LS1,LS2) hinsichtlich des für die Modulation benutzten Frequenzgemisches (FG1,FG2,SFG) ausgewertet werden und
- bei dem die Datenpakete anhand den aus den Frequenzgemischen (FG1,FG2,SFG) gewonnenen Leitweginformationen (li1,li2) vermittelt werden,
**dadurch gekennzeichnet,**
- **dass** als Trägerfrequenz der Leitwegsignale (LS1,LS2) die oder die halbe Datenübertragungsrate gewählt wird und
- **dass** für die Modulation des Leitwegsignals (LS1,LS2) niederfrequente Modulationsfrequenzen benutzt werden.

2. Verfahren nach Anspruch 1
**dadurch gekennzeichnet,**
**dass** die Umsetzung der Leitweginformationen (li1,li2) in Leitwegsignale (LS1,LS2) durch Amplitudenmodulation eines Trägersignals (cs) mit einem Frequenzgemisch (FG1,FG2,SFG) durchgeführt wird.

3. Verfahren nach Anspruch 1,
**dadurch gekennzeichnet,**
**dass** die Umsetzung der Leitweginformationen (li1,li2) in Leitwegsignale (LS1,LS2) durch Winkelmodulation eines Trägersignals (cs) mit einem Frequenzgemisch (FG1,FG2,SFG) durchgeführt wird.

4. Verfahren nach einem der Ansprüche 1 bis 3,
**dadurch gekennzeichnet,**
**dass** mit Hilfe des zumindest einem Datenpaket (DP1,DP2) nachgestellten Leitwegsignals (LS2) eine Verbindung beendet wird.

5. Optisches Übertragungssystem (OTS) mit Leitweglenkung für Datenpakete (DP), die jeweils durch einen datenfreien Zeitabschnitt (L) getrennt sind,
- mit einer Sende- und einer Empfangseinheit (TU,RU),
- mit einer sendeseitig angeordneten Umsetzeinheit (CU) zum Umsetzen der Leitweginformationen (li1,li2) für zumindest ein Datenpaket (DP1) in durch Modulation eines Trägersignals (cs) mit einem Frequenzgemisch (FG1,FG2,SFG) erzeugte Leitwegsignale (LS1,LS2) sowie zum Anfügen der Leitwegsignale (LS1,LS2) vor und/oder nach einem Datenpaket (DP1,DP2),
- mit Übertragungsmitteln (OF1) zum Übertragen der Datenpakete (DP1,DP2) inklusive der vor- und/oder nachgestellten Leitwegsignale (LS1,LS2),
- mit einer empfangsseitig angeordneten Auswerteeinheit (EVU) zum Erkennen und Auswerten der Leitwegsignale (LS1,LS2) und
- mit einer Schalteinheit (SWU) zum Durchschalten des zumindest einen Datenpaketes (DP1) anhand der durch die Auswertung der Leitwegsignale (LS1,LS2) ermittelten Leitweginformationen (li1,li2),
**dadurch gekennzeichnet,**
- **dass** die Trägersignale (cs) als Trägerfrequenz die oder die halbe Datenübertragungsrate aufweisen und
- **dass** zur Modulation der Leitwegsignale (LS1,LS2) in der sendeseitig angeordneten Umsetzeinheit (CU) niederfrequente Modulationsfrequenzen vorgesehen sind.

6. Optisches Übertragungssystem nach Anspruch 5,
**dadurch gekennzeichnet,**
**dass** eine Synchronisationseinheit (SYNC) vorgesehen ist, die das Trägersignal (cs) des einem Datenpaket (DP1) vorgestellten Leitwegsignals (LS1) zur Taktsynchronisierung verwendet.

7. Optisches Übertragungssystem nach Anspruch 5 oder 6,
**dadurch gekennzeichnet,**
**dass** ein empfangsseitig angeordneter, optischer Verzweiger (OK) zum Abteilen eines Teils des Datenpaketstromes (DS1) vorgesehen ist, wobei der abgeteilte Teil des Datenpaketstromes (DS12) an die Auswerteeinheit (EVU) weitergeleitet wird.

8. Optisches Übertragungssystem nach einem der Ansprüche 5 bis 7,
**dadurch gekennzeichnet,**
**dass** empfangsseitig ein optisches Verzögerungsglied (DE) zum Verzögern des Datenpaketstromes (DS11) um eine Mindestlänge vorgesehen ist, wobei sich die Mindestlänge aus der für die Auswertung des vorgestellten Leitwegsignals (LS1) und der zum Durchschalten des Leitweges (LW) benötigten Schaltdauer zusammensetzt.

9. Optisches Übertragungssystem nach Anspruch 8,
**dadurch gekennzeichnet,**
**dass** das optische Verzögerungsglied (DE) zwischen dem optischen Verzweiger (OK) und der optischen Schalteinheit (SWU) angeordnet ist.

## Claims

1. Method for routing of data packets (DP) of an optical data packet stream (DS1), which are separated by a data-free period of time in each case,
- in which, on the send side, routing information (li1, li2) is converted into assigned frequency mixtures (FG1, FG2, SFG),
- in which through modulation of a carrier signal (CS) with these frequency mixtures (FG1, FG2, SFG), routing signals (LS1, LS2) are created,
- in which the created routing signals (LS1, LS2) are placed before or after at least one data packet (DP1),
- in which the data packets (DP1, DP2) are transmitted inclusive of the routing signals (LS1, LS2),
- in which, on the receive side, the routing signals (LS1, LS2) are evaluated with regard to the frequency mixture (FG1, FG2, SFG) used for the modulation, and
- in which the data packets are switched on the basis of the routing information (li1, li2) obtained from the frequency mixtures (FG1, FG2, SFG),
**characterized in that**
- the transmission rate or a half transmission rate is selected as carrier frequency of the routing signals (LS1, LS2), and
- low modulation frequencies are used for the modulation of the routing signals (LS1, LS2).

2. Method in accordance with claim 1
**characterized in that**
the routing information (li1, li2) is converted into routing signals (LS1, LS2) by amplitude modulation of a carrier signal (CS) with a frequency mixture (FG1, FG2, SFG).

3. Method in accordance with claim 1,
**characterized in that**
the routing information (li1, li2) is converted into routing signals (LS1, LS2) by angle modulation of a carrier signal (CS) with a frequency mixture (FG1, FG2, SFG).

4. Method in accordance with one of the claims 1 to 3,
**characterized in that**
a connection is ended with the aid of the at least one routing signal (LS2) placed after a data packet (DP1, DP2).

5. Optical transmission system (OTS) with routing for data packets (DP) which are separated in each case by a data-free period of time (L),
- with a transmitter and a receiver unit (TU, RU),
- with a converter unit (CU) arranged on the transmit side for conversion of the routing information (li1, 1i2) for at least one data packet (DP1) into routing signals (LS1, LS2) created by modulation of a carrier signal (CS) with a frequency mixture (FG1, FG2, SFG), as well as for inserting the routing signals (LS1, LS2) before and/or after a data packet (DP1, DP2),
- with transmission means (OF1) for transmission of the data packets (DP1, DP2) inclusive of their leading and trailing routing signals (LS1, LS2),
- with an evaluation unit (EVU) arranged on the receive side for detection and evaluation of the routing signals (LS1, LS2) and
- with a switching unit (SWU) for through switching the at least one data packet (DP1) on the basis of the routing information (li1, li2) determined by evaluation of the routing signals (LS1, LS2),
**characterized in that**
- the carrier signals (CS) have the data transmission rate or the hallf data transmission rate as their carrier frequency, and
- for modulation of the routing signals (LS1, LS2) low modulation frequencies are provided in the converter unit (CU) arranged on the transmit side.

6. Optical transmission system in accordance with claim 5,
**characterized in that**
a synchronization unit (SYNC) is provided, which uses the carrier signal (CS) of the routing signal (LS1) preceding a data packet (DP1) for timing synchronization.

7. Optical transmission system in accordance with claim 5 or 6,
**characterized in that**
an optical coupler (OK) arranged on the receive side is provided to separate a part of the data packet stream (DS1), with the separated part of the data packet stream (DS12) being forwarded to the evaluation unit (EVU).

8. Optical transmission system in accordance with one of the claims 5 to 7,
**characterized in that**
an optical delay element (DE) is provided on the receive side to delay the data packet stream (DS11) by a minimum length of time, with the minimum length of time being made up of the switching time needed for the evaluation of the leading routing signal (LS1) and the time needed to through connect the route (LW).

9. Optical transmission system in accordance with claim 8,
**characterized in that**
the optical delay element (DE) is arranged between the optical coupler (OK) and the optical switching unit (SWU).

## Revendications

1. Procédé de routage de paquets de données (DP) d'un flux de paquets de données optique (DS1), qui sont séparés par un intervalle de temps (L) exempt de données,
- dans lequel, côté émission, des informations de routage (li1, li2) sont converties en mélanges de fréquences (FG1, FG2, SFG)affectés,
- dans lequel des signaux de routage (LS1, LS2) sont générés par modulation d'un signal porteur (cs) au moyen de ces mélanges de fréquences,
- dans lequel les signaux de routage (LS1, LS2) générés sont mis avant et/ou après au moins un paquet de données (DP1),
- dans lequel les paquets de données (DP1, DP2) sont transmis, y compris les signaux de routage (LS1, LS2),
- dans lequel, côté réception, les signaux de routage (LS1, LS2) sont évalués quant au mélange de fréquences (FG1, FG2, SFG) utilisé pour la modulation et
- dans lequel les paquets de données sont transmis à l'aide des informations de routage (li1, li2) obtenues à partir des mélanges de fréquences (FG1, FG2, SFG),
**caractérisé**
- **en ce que** le taux de transmission de données ou le demi-taux de transmission de données est sélectionné comme fréquence porteuse des signaux de routage (LS1, LS2) et
- **en ce que** des fréquences de modulation à basse fréquence sont utilisées pour la modulation du signal de routage (LS1, LS2).

2. Procédé selon la revendication 1,
**caractérisé**
**en ce que** la conversion des informations de routage (li1, li2) en signaux de routage (LS1, LS2) est réalisée au moyen d'un mélange de fréquences (FG1, FG2, SFG) par modulation d'amplitude d'un signal porteur (cs).

3. Procédé selon la revendication 1,
**caractérisé**
**en ce que** la conversion des informations de routage (li1, li2) en signaux de routage (LS1, LS2) est réalisée au moyen d'un mélange de fréquences (FG1, FG2, SFG) par modulation angulaire d'un signal porteur (cs).

4. Procédé selon l'une quelconque des revendications 1 à 3,
**caractérisé**
**en ce qu'**une connexion est terminée à l'aide du signal de routage (LS2) mis après l'au moins un paquet de données (DP1, DP2).

5. Système de transmission optique (OTS) avec routage pour des paquets de données (DP) qui sont respectivement séparés par un intervalle de temps (L) exempt de données,
- comprenant une unité d'émission et une unité de réception (TU, RU),
- comprenant une unité de conversion (CU) placée côté émission, destinée à convertir les informations de routage (li1, li2) pour au moins un paquet de données (DP1) en signaux de routage (LS1, LS2) générés au moyen d'un mélange de fréquences (FG1, FG2, SFG) par modulation d'un signal porteur (cs), ainsi que destinée à ajouter les signaux de routage (LS1, LS2) avant et/ou après un paquet de données (DP1, DP2),
- comprenant des moyens de transmission (OF1) pour transmettre les paquets de données (DP1, DP2), y compris les signaux de routage (LS1, LS2) mis avant et/ou après,
- comprenant une unité d'évaluation (EVU) placée côté réception pour identifier et évaluer les signaux de routage (LS1, LS2) et
- comprenant une unité de commutation (SWU) pour connecter l'au moins un paquet de données (DP1) à l'aide des informations de routage (li1, li2) déterminées par l'évaluation des signaux de routage (LS1, LS2),
**caractérisé**
- **en ce que** les signaux porteurs (cs) présentent le taux de transmission de données ou le demi-taux de transmission de données comme fréquence porteuse et
- **en ce que** des fréquences de modulation à basse fréquence sont prévues pour la modulation des signaux de routage (LS1, LS2) dans l'unité de conversion (CU) placée côté émission.

6. Système de transmission optique selon la revendication 5,
**caractérisé**
**en ce qu'**une unité de synchronisation (SYNC) est prévue, qui, pour la synchronisation de la cadence, utilise le signal porteur (cs) du signal de routage (LS1) mis avant un paquet de données (DP1).

7. Système de transmission optique selon la revendication 5 ou 6,
**caractérisé**
**en ce qu'**un point de répartition optique (OK), placé côté réception, est prévu pour diviser une partie du flux de paquets de données (DS1), la partie divisée du flux de paquets de données (DS12) étant transférée à l'unité d'évaluation (EVU).

8. Système de transmission optique selon l'une quelconque des revendications 5 à 7,
**caractérisé**
**en ce qu'**un élément à retard optique (DE) est prévu côté réception pour retarder le flux de paquets de données (DS11) d'une longueur minimale, la longueur minimale étant constituée de la durée de commutation nécessaire pour l'évaluation du signal de routage (LS1) mis en avant et pour la connexion de la voie de routage (LW).

9. Système de transmission optique selon la revendication 8,
**caractérisé**
**en ce que** l'élément à retard optique (DE) est placé entre le point de répartition optique (OK) et l'unité de commutation optique (SWU).
